# EUROPEAN PATENT APPLICATION

(11) **EP 4 844 083 A1**
(43) Date of publication of application: **25.11.2026**
(21) Application number: 25210523.4
(22) Date of filing: 22.10.2025
(51) Int. Cl.: C22C 1/03, B22D 17/00, B22D 21/00, B22D 21/04, C22C 23/02, C22C 23/06

(54) **DIE-CAST MAGNESIUM ALLOY AND METHOD FOR MANUFACTURING THE SAME, AND AUTOMOTIVE STRUCTURAL COMPONENT**

(30) Priority: 22.05.2025 CN 202510670762
(71) Applicant: Xiaomi EV Technology Co., Ltd., Beijing 100176 (CN)
(72) Inventor: WU, Xinxing, Beijing, 100176 (CN); MA, Qiu, Beijing, 100176 (CN); XING, Yubing, Beijing, 100176 (CN); YANG, Dong, Beijing, 100176 (CN); DING, Zhi, Beijing, 100176 (CN)
(74) Representative: Stöckeler, Ferdinand

(57) **Abstract**

Provided is a die-cast magnesium alloy includes: 4.2 to 7.0 wt% of Aluminum (Al), 0.15 to 0.5 wt% of Manganese (Mn), 0.20 to 2.50 wt% of Rare Earth elements (RE), 0.01 to 1.5 wt% of Yttrium (Y), 0.03 to 0.80 wt% of Calcium (Ca), 0.01 wt% or less of Iron+Nickel+Copper (Fe+Ni+Cu), 0.20 wt% or less of Zinc (Zn), 0.05 wt% or less of impurities, and a balance of Magnesium (Mg), wherein RE+Y ≥ 0.5 wt%, and RE comprises one or both of Lanthanum (La) and Cerium (Ce).

## Description

### TECHNICAL FIELD

The present invention relates to the field of magnesium alloy, and more particularly, to a die-cast magnesium alloy and a method for manufacturing the same, and an automotive structural component.

### BACKGROUND

With the rapid development of new energy vehicles, automobile companies have paid increasing attention to cruising range of the vehicles, and asked higher requirements for lightweight. Magnesium alloy, as the lightest metallic structural material in engineering applications, coupled with China's abundant magnesium resources, enables to achieve the complete material independence. In recent years, with the continuous decline in the price of magnesium alloy, the use of magnesium alloy has gained a certain cost advantage, making the promotion of magnesium alloy applications in automobiles a current research focus.

Due to its unique hexagonal close-packed structure, magnesium alloy has limited slip systems and is difficult to be processed and deform at room temperature, making casting the simplest and most feasible forming method. The application of traditional die-cast magnesium alloys in automobiles is mainly limited to interior parts with general requirements for alloy performance, such as instrument panel brackets and seat frames, or electric appliance housing requiring thermal conductivity. However, they have not yet been genuinely applied in automotive body structural components. With the increasing requirements for lightweight of automobiles, there is a growing demand to promote the use of magnesium alloys in automotive body structures and even in integrated large die-cast parts.

For die-cast magnesium alloys intended for body structural components, particularly integrated large-scale die-cast structural components, in addition to relatively low cost, excellent casting performance (such as fluidity, resistance to hot cracking susceptibility, etc.), and good comprehensive mechanical properties, excellent bending resistance is also required, so that the die-cast magnesium alloy may match the condition of compressive bending deformation during collisions, thereby achieving better impact energy absorption. Traditional magnesium alloys, such as AZ, AM, and AS series, fail to meet the requirements due to poor alloy elongation, alloy strength, or alloy casting performance, respectively. Alloying by adding rare earth elements (RE) has become a mainstream solution. Related technologies of magnesium alloy include a Mg-Al-RE-Mn-Ca die-cast rare earth magnesium alloy with high plasticity and a method for manufacturing the same, which achieves an alloy tensile strength of 240~270 MPa, a yield strength of 160~180 MPa, and an elongation of 9~12%. However, the alloy contains an excessive amount of RE (≥6 wt%), which not only increases the alloy cost but also causes difficulty in alloy smelting. Meanwhile, the excessive RE leads to severe alloy segregation and poor performance in the parts, making it unsuitable for the production of large parts. Related technologies of magnesium alloy further include a Mg-Al-RE alloy with a tensile strength of approximately 230 MPa, a yield strength of 161 MPa, and an elongation of 5.8%, which fails to meet the joining performance requirements of automotive body structural components; a die-cast magnesium alloy with high strength and toughness and a method for manufacturing the same. The magnesium alloy exhibits excellent mechanical properties after artificial heat treatment (T6), but such treatment inevitably increases part deformation, rendering it unsuitable for large-sized die-cast parts. At the same time, the low Al content in the alloy fails to meet the die-casting requirements for large-sized parts. In particular, the existing patents fail to mention the alloy's bending resistance, and subjectively equate the alloy's tensile elongation with its toughness. In fact, the stress states of the two are inconsistent, and bending resistance better reflects the actual collision conditions of parts, yet it has not attracted sufficient attention.

### SUMMARY

The object of the present invention is to provide a die-cast magnesium alloy, a method for manufacturing the same, and an automotive structural component, which has a relatively low rare earth element addition, and allows the die-cast parts to exhibit excellent bending performances without undergoing heat treatment, making them more suitable for automotive structural components subjected to conditions of collision and compression.

In order to solve the problems described above, embodiments of the present invention provide a die-cast magnesium alloy including 4.2 to 7.0 wt% of Aluminum (Al), 0.15 to 0.5 wt% of Manganese (Mn), 0.20 to 2.50 wt% of Rare Earth elements (RE), 0.01 to 1.5 wt% of Yttrium (Y), 0.03 to 0.80 wt% of Calcium (Ca), 0.01 wt% or less of Iron+Nickel+Copper (Fe+Ni+Cu), 0.20 wt% or less of Zinc (Zn), 0.05 wt% or less of impurities, and a balance of Magnesium (Mg), wherein RE+Y ≥ 0.5 wt%, and RE includes one or both of Lanthanum (La) and Cerium (Ce).

The present invention provides a die-cast magnesium alloy by the technical solution described above. The die-cast magnesium alloy of the present invention, while strictly controlling the contents of elements such as Fe, Cu, Ni, and Zn, on the one hand, introduces the Ca element to refine the size of the α-Mg, on the other hand, introduces the rare earth elements (RE) and element Y in low contents to not only reduce the alloy application cost, avoid segregation and ensure excellent casting performance, but also makes good use of the synergistic optimization effect of the two elements. Eventually, a relatively ideal microstructure is obtained, and excellent comprehensive performances are achieved. The die-cast magnesium alloy provided by the present invention has excellent casting performance. After being cast with an S-shaped flow mold over 3.5 meters in length, the resulting parts not only have complete mold filling but also exhibit excellent surface quality. Meanwhile, the alloy has excellent bending performance, which well matches the extrusion conditions of structural components subjected to collision forces. This better meets practical requirements, ensures collision safety performance, and makes the alloy particularly suitable for use in medium and large-sized automotive structural parts.

In some embodiments, the die-cast magnesium alloy includes 4.5 to 6.5 wt% of Al, 0.15 to 0.50 wt% of Mn, 0.2 to 1.8 wt% of RE, 0.01 to 1.2 wt% of Y, 0.03 to 0.50 wt% of Ca, 0.01 wt% or less of Fe+Ni+Cu, 0.20 wt% or less of Zn, 0.05 wt% or less of impurities, and a balance of Mg. The embodiments of the present invention provides a die-cast magnesium alloy, which, while strictly controlling the contents of elements such as Fe, Cu, Ni, and Zn, on the one hand, introduces the Ca element to refine the size of the α-Mg, on the other hand, introduces the rare earth elements and element Y in low contents to not only reduce the alloy application cost, avoid segregation and ensure excellent casting performance (such as fluidity, resistance to hot cracking susceptibility, etc.), but also makes good use of the synergistic optimization effect of the two elements. Eventually, a relatively ideal microstructure is obtained, and excellent comprehensive performances are achieved.

In some preferred embodiments, in the die-cast magnesium alloy, 0.5 wt% ≤ RE+Y ≤ 2.0 wt%, which further improves the performance of the die-cast magnesium alloy.

In some preferred embodiments, in the die-cast magnesium alloy, 1 ≤ RE/Y ≤ 13, preferably, 1 ≤ RE/Y ≤ 12. The content ratio of RE/Y in the die-cast magnesium alloy within the range of the present embodiment, especially within the preferred range, can exert a better synergistic application effect in the die-cast magnesium alloy.

In some embodiments, the microstructure of the die-cast magnesium alloy includes an α-Mg substrate as well as a Mg₁₇Al₁₂ phase, long rod-like Al₁₁RE₃ phase, fine dot-like Al₃RE phase, and Al₂Y phase distributed in the α-Mg substrate; the α-Mg substrate is spheroidal-like. In some preferred embodiments, the α-Mg substrate is of an average grain size of 12 µm or less. The α-Mg substrate in the die-cast magnesium alloy provided by the embodiments of the present invention is of a small grain size and is uniformly distributed, which is more conducive to improving the bending performance of the magnesium alloy.

In some embodiments, the die-cast magnesium alloy has a 2 mm equivalent bend angle of 50° or more, exhibiting excellent bending performance.

According to a second aspect of embodiments of the present invention, there is provided a method for manufacturing a die-cast magnesium alloy, including steps:
S1, subjecting a raw material of magnesium alloy to a smelting treatment to obtain a magnesium alloy melt, wherein the raw material includes: 4.2 to 7.0 wt% of Al, 0.15 to 0.5 wt% of Mn, 0.20 to 2.50 wt% of RE, 0.01 to 1.5 wt% of Y, 0.03 to 0.80 wt% of Ca, 0.01 wt% or less of Fe+Ni+Cu, 0.20 wt% or less of Zn, 0.05 wt% or less of impurities, and a balance of Mg, wherein RE+Y ≥ 0.5 wt%, and RE comprises one or both of La and Ce;
S2, adding a refining agent to the magnesium alloy melt for a refining treatment and adding a covering agent for a standing and cooling treatment, thereby obtaining an ingot casting material; and
S3, placing the ingot casting material in a die casting melting furnace to perform a melting treatment and die-casting treatment.

The present invention provides a method with a simple process for manufacturing a die-cast magnesium alloy by the technical solution described above. On the premise of ensuring good casting performance (such as fluidity, resistance to hot cracking susceptibility, etc.), the method enables the alloy to exhibit excellent bending performancewithout heat treatment, and is suitable for manufacturing the die-cast magnesium alloy, which is obtained by die-cast formation of large-sized die-cast parts and is of high bending performance.

In some embodiments, in step S2, the refining agent includes a first component and a second component, the first component includes one or more of magnesium chloride, potassium chloride, and sodium chloride, the second component includes one or more of calcium chloride, calcium fluoride, and barium chloride. The components of the refining agent provided in the embodiments of the present invention is suitable for use in the refining treatment for the magnesium alloy.

In some embodiments, the covering agent includes one or more of magnesium chloride and potassium chloride. Optionally, the covering agent covers the surface of the magnesium alloy melt, preventing the magnesium alloy melt from burning during smelting and thereby providing a flame-retardant effect.

In some embodiments, in step S2, the refining treatment includes stirring at 740 to 760°C for 10 to 30 minutes with the refining agent added during the stirring.

In some embodiments, the standing and cooling treatment includes standing for 30 to 50 minutes to cool the magnesium alloy melt to 670 to 720°C, which contributes to improving the performances of the magnesium alloy.

In some embodiments, in step S3, the melting treatment is performed at 690 to 720°C, which contributes to improving the performances of the magnesium alloy.

In some embodiments, the die-casting treatment is performed at conditions of a die-cast speed of 3.0 to 7.5 m/s, a pressure-holding period of 3 to 15 seconds, and a mold temperature of 200 to 280°C, which contributes to improving the die-casting effect of the magnesium alloy.

According to a third aspect of embodiments of the present invention, there is provided a die-cast magnesium alloy manufactured by a method according to the second aspect of embodiments of the present invention.

According to a forth aspect of embodiments of the present invention, there is provided an automotive structural component, including a die-cast magnesium alloy according to the first aspect or the third aspect of embodiments of the present invention. The die-cast magnesium alloy provided by the present invention has excellent casting performance. After being cast with an S-shaped flow mold over 3.5 meters in length, the resulting parts not only have complete mold filling but also exhibit excellent surface quality. Meanwhile, the alloy has excellent bending performance, which well matches the extrusion conditions of structural components subjected to collision forces. This better meets practical requirements, ensures collision safety performance, and makes the alloy particularly suitable for use in medium and large-sized automotive structural parts.

Other features and advantages of the present invention will be illustrated in detail in the following detailed description.

### BRIEF DESCRIPTION OF THE DRAWINGS

The accompanying drawings, which are incorporated in and constitute a part of this specification, illustrate embodiments consistent with the present invention and, together with the description, serve to explain the principles of the present invention.
Fig. 1 is a schematic diagram of an S-shaped mold for verifying fluidity of an alloy in a test example of the present invention.
Fig. 2a is a Scanning Electron Microscope (SEM) graph of a die-cast magnesium alloy obtained in Example 3.
Fig. 2b is a SEM graph of a die-cast magnesium alloy obtained in Example 7.

### Reference Numerals

a - Sampling Position.

### DETAILED DESCRIPTION

Specific embodiments of the present invention are illustrated in detail below with reference to the drawings. It is to be understood that the specific description described herein are exemplary and explanatory only and are not restrictive of the present invention.

The present invention, based on the actual conditions of collision-induced compressive bending deformation in the die-cast magnesium alloy structural components, maximizes the bending performances of magnesium alloys while ensuring certain mechanical properties and casting performances, thereby further enhancing vehicle collision safety. When analyzing the bending deformation mechanism of magnesium alloys, the inventors of the present invention discover that the bending deformation of magnesium alloy is strongly influenced by the morphology and distribution of its internal second phases. During bending deformation of the alloy, crack initiation sites tend to occur at the coarse as-cast second phases and the second phases with acicular/long rod-like morphology in the alloy, because stress concentration tends to occur at their tips. In addition, the morphology of α-Mg grains (i.e., uniformity and size) plays a role in microcrack propagation. In other words, the more uniform and finer the α-Mg grains in the alloy, and the fewer the second phases (especially acicular/long rod-like second phases) distributed in the alloy, the better the bending performance of the alloy.

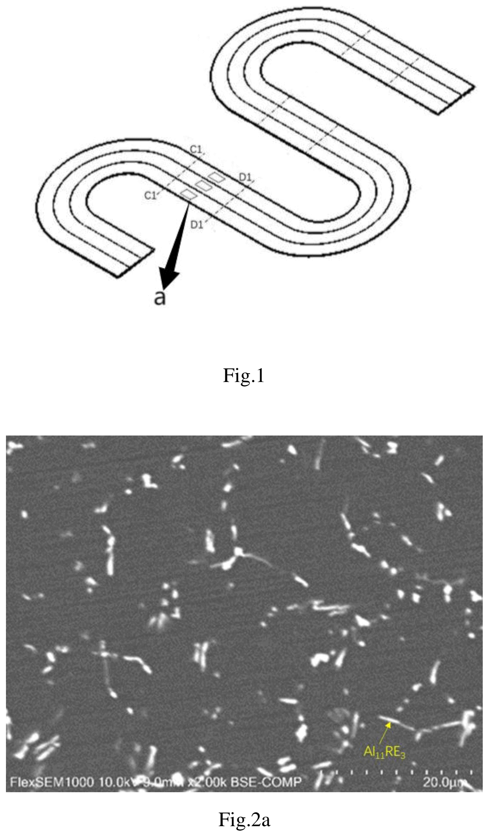

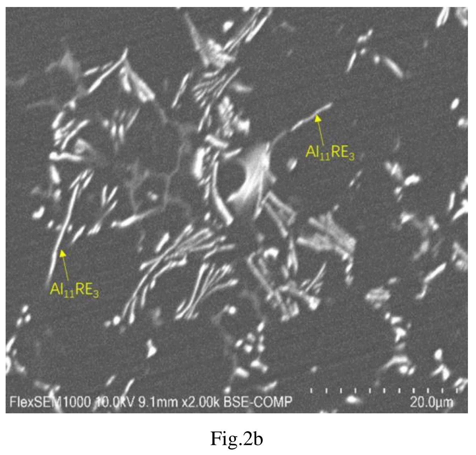

Based on this finding, the present invention improves the alloy's bending performance on the basis of the existing AM-series alloy system through the following aspects. First, the content of impurity elements such as Fe, Cu, Zn, and Ni, and the Al content in the alloy are strictly controlled on the premise of ensuring the alloy's casting performance. This avoids the formation of the acicular second phases and excessive coarse as-cast Mg₁₇Al₁₂ second phases, thereby reducing the number of crack initiation sites. Second, a small amount of Ca is introduced to refine the α-Mg grain size, controlling a small average grain size (less than 12 µm). Third, effective RE elements (one or both of La and Ce) and element Y are introduced by the present invention for synergistic performance optimization: due to the extremely low solid solubility of RE elements in the Mg matrix, RE forms second phases by combining with Al, thereby transforming phase transformation the coarse, continuous eutectic Mg₁₇Al₁₂ phases in the alloy into fine, discrete island-like distributions by phase transformation. However, RE itself contributes limited strength improvement and may even degrade bending performance due to the numerous long rod-like Al₁₁RE₃ phases formed by its combination with Al (as shown in Fig. 2b). In contrast, by adding element Y, which has high solid solubility, to the Mg alloy, not only sthe olid solution strengthening enhances alloy strength, but also the high-melting-point, fine Al₂Y phases formed by Y and Al in the early solidification stage can act as heterogeneous nucleation sites to further refine the substrate and Al₁₁RE₃ phases (as shown in Fig. 2a). This can effectively improve the bending performance of the magnesium alloy while balancing its mechanical properties.

According to a first aspect of embodiments of the present invention, there is provided a die-cast magnesium alloy including 4.2 to 7.0 wt% of Aluminum (Al), 0.15 to 0.5 wt% of Manganese (Mn), 0.20 to 2.50 wt% of Rare Earth elements (RE), 0.01 to 1.5 wt% of Yttrium (Y), 0.03 to 0.80 wt% of Calcium (Ca), 0.01 wt% or less of Iron+Nickel+Copper (Fe+Ni+Cu), 0.20 wt% or less of Zinc (Zn), 0.05 wt% or less of impurities, and a balance of Magnesium (Mg), wherein RE+Y ≥ 0.5 wt%, and RE includes one or both of Lanthanum (La) and Cerium (Ce). The present invention provides a die-cast magnesium alloy, which, while strictly controlling the contents of elements such as Fe, Cu, Ni, and Zn, on the one hand, introduces the Ca element to refine the size of the α-Mg, on the other hand, introduces the rare earth elements (RE) and element Y in low contents to not only reduce the alloy application cost, avoid segregation and ensure excellent casting performance(such as fluidity, resistance to hot cracking susceptibility, etc.), but also makes good use of the synergistic optimization effect of the two elements. Eventually, a relatively ideal microstructure is obtained, and excellent comprehensive performances are achieved. The die-cast magnesium alloy provided by the present invention has excellent casting performance. After being cast with an S-shaped flow mold over 3.5 meters in length, the resulting parts not only have complete mold filling but also exhibit excellent surface quality. Meanwhile, the alloy has excellent bending performance, which well matches the extrusion conditions of structural components subjected to collision forces. This better meets practical requirements, ensures collision safety performance, and makes the alloy particularly suitable for use in medium and large-sized automotive structural parts.

In a preferred embodiment, the die-cast magnesium alloy includes 4.5 to 6.5 wt% of Al, 0.15 to 0.50 wt% of Mn, 0.2 to 1.8 wt% of RE, 0.01 to 1.2 wt% of Y, 0.03 to 0.50 wt% of Ca, 0.01 wt% or less of Fe+Ni+Cu, 0.20 wt% or less of Zn, 0.05 wt% or less of impurities, and a balance of Mg. When the contents of components in the die-cast magnesium alloy are within the range of the present embodiment, the die-cast magnesium alloy can have better bending performance while maintaining good mechanical properties.

In a preferred embodiment, in the die-cast magnesium alloy, 0.5 wt% ≤ RE+Y ≤ 2.0 wt%. The total content of RE+Y in the die-cast magnesium alloy within the range of the present embodiment, further improves the performance of the materal.

In a preferred embodiment, in the die-cast magnesium alloy, 1 ≤ RE/Y ≤ 13, preferably, 1 ≤ RE/Y ≤ 12, further preferably, 2 ≤ RE/Y ≤ 9. The content ratio of RE/Y in the die-cast magnesium alloy within the range of the present embodiment, especially within the preferred range, can exert a better synergistic application effect in the die-cast magnesium alloy.

In a preferred embodiment, the microstructure of the die-cast magnesium alloy includes an α-Mg substrate as well as a Mg₁₇Al₁₂ phase, long rod-like Al₁₁RE₃ phase, fine dot-like Al₃RE phase, and Al₂Y phase distributed in the α-Mg substrate. Through the combination of formulations of the present invention, a more reasonable microstructural composition can be achieved, and the dominance of long rod-like second phase that are detrimental to improving bending performance is avoided.

In a preferred embodiment, the α-Mg substrate is spheroidal-like. The α-Mg substrate in the die-cast magnesium alloy provided by the embodiments of the present invention is of a small grain size and is uniformly distributed, which is more conducive to improving the bending performance of the magnesium alloy.

In a preferred embodiment, the die-cast magnesium alloy has a 2 mm equivalent bend angle of 50° or more, exhibiting excellent bending performance.

According to a second aspect of embodiments of the present invention, there is provided a method for manufacturing a die-cast magnesium alloy, including steps:
S1, subjecting a raw material of magnesium alloy to a smelting treatment to obtain a magnesium alloy melt, wherein the raw material includes: 4.2 to 7.0 wt% of Al, 0.15 to 0.5 wt% of Mn, 0.20 to 2.50 wt% of RE, 0.01 to 1.5 wt% of Y, 0.03 to 0.80 wt% of Ca, 0.01 wt% or less of Fe+Ni+Cu, 0.20 wt% or less of Zn, 0.05 wt% or less of impurities, and a balance of Mg, wherein RE+Y ≥ 0.5 wt%, and RE comprises one or both of La and Ce;
S2, adding a refining agent to the magnesium alloy melt for a refining treatment and adding a covering agent for a standing and cooling treatment, thereby obtaining an ingot casting material; and
S3, placing the ingot casting material in a die casting melting furnace to perform a melting treatment and a die-casting treatment.

The present invention provides a method for manufacturing a die-cast magnesium alloy with a simple process. On the premise of ensuring good casting performance (such as fluidity, resistance to hot cracking susceptibility, etc.), the method enables the alloy to exhibit excellent bending performance without heat treatment, and is suitable for manufacturing the die-cast magnesium alloy, which is obtained by die-cast formation of large-sized die-cast parts and is of high bending performance .

In a specific embodiment, in step S1, the use forms of the raw material of magnesium alloy include a pure Mg ingot, an Mg-RE master alloy, an Mg-Y master alloy, a pure Al ingot, an Mg-Mn master alloy, an Mg-Ca master alloy, or metallic Ca.

In a specific embodiment, step S1 includes: melting the pure Mg ingot at a temperature of 730-760°C under a protective atmosphere to obtain a pure magnesium melt; and adding the Mg-RE master alloy, the Mg-Y master alloy, the pure Al ingot, the Mg-Mn master alloy, the Mg-Ca master alloy, or the metallic Ca into the pure magnesium melt for melting, thereby obtaining the magnesium alloy melt. The protective atmosphere includes gases such as nitrogen.

In a preferred embodiments, in step S2, the refining agent includes a first component and a second component, the first component includes one or more of magnesium chloride, potassium chloride, and sodium chloride, the second component includes one or more of calcium chloride, calcium fluoride, and barium chloride. The components of the refining agent provided in the embodiments of the present invention is suitable for use in the refining treatment for the magnesium alloy. It may be purchased through ordinary commercial channels or manufactured by known methods.

In an embodiment, the covering agent includes one or more of magnesium chloride and potassium chloride, which may be purchased through ordinary commercial channels or manufactured by known methods. Optionally, the covering agent covers the surface of the magnesium alloy melt, preventing the magnesium alloy melt from burning during smelting and thereby providing a flame-retardant effect.

In an embodiment, in step S2, the refining treatment includes stirring at 740 to 760°C for 10 to 30 minutes with the refining agent added during the stirring.

Optionally, the standing and cooling treatment includes standing for 30 to 50 minutes to cool the magnesium alloy melt to 670 to 720°C.

In an embodiment, in step S3, the melting treatment is performed at 690 to 720°C.

In an embodiment, the die-casting treatment includes: heating the die-casting mold to the required temperature under the protective atmosphere and then holding the temperature; and performing the die-casting treatment to the melted ingot material when the ingot material is melted. Optionally, the die-casting treatment is performed at conditions of a die-cast speed of 3.0 to 7.5 m/s, a pressure-holding period of 3 to 15 seconds, and a mold temperature of 200 to 280°C.

According to a third aspect of embodiments of the present invention, there is provided a die-cast magnesium alloy manufactured by a method according to the second aspect of embodiments of the present invention.

According to a forth aspect of embodiments of the present invention, there is provided an automotive structural component, including a die-cast magnesium alloy according to the first aspect or the third aspect of embodiments of the present invention.

In a specific embodiment, the automotive structural components include, but are not limited to, safety structural parts such as a left/right anti-collision bar (beam) of a front/rear door, front/rear bumper, an A-pillar reinforcement panel, a B-pillar reinforcement panel, a C-pillar reinforcement panel, a middle channel, a roof reinforcement beam, integrated rear floor, and integrated front compartment. They may also be applied to the manufacturing of battery enclosures for new energy vehicles.

The embodiments of the present invention will be further illustrated in detail through the following examples. All raw materials used in the examples are commercially available.

In the following examples and comparative examples, the molds used for die-casting treatment were S-shaped flow molds as shown in Fig. 1, and the thickness of the specimens is approximately 3 mm. In Fig. 1, the specimens for testing alloy mechanical properties and bending performances were sampled at position C1-D1, and the casting performance was evaluated by whether the flow mold could be completely formed and the surface quality of the parts.

### Example 1

(1) Preparation before smelting: The pure Mg ingot, the Mg-RE master alloy, the Mg-Y master alloy, the pure Al ingot, the Mg-Mn master alloy, the Mg-Ca master alloy or the metallic Ca were used as raw materials for respective elements in the magnesium alloy according to the contents of the magnesium alloy component listed in Table 1. After appropriately considering burning loss, the corresponding raw materials were weighed according to the mass percentage of the components within the above magnesium alloy composition range, where RE was one or both of La and Ce. All raw materials were dried.
(2) Alloy smelting: The Magnesium ingot was placed in a crucible and melted at 745°C under a protective gas to form a pure magnesium melt. Then the required pure Al ingot, Mg-RE, Mg-Y, Mg-Mn and Mg-Ca (or metallic Ca) master alloys were added in sequence to obtain the magnesium alloy melt.
(3) The magnesium alloy melt was stirred at a controlled temperature of 750°C, and the special refining agent for magnesium alloy was added during the stirring process for refining. When the refining was finished, the flux and dross on the liquid surface were removed, and then the covering agent was gently sprinkled on the surface. Then, the mixture was left to stand, and casting was performed when the temperature of the magnesium alloy melt cooled to 700°C, thereby the ingot material was obtained.
   Among them, the main components of the refining agent for the magnesium alloy were magnesium chloride, potassium chloride, and sodium chloride, with the balance of conventional reagents such as calcium chloride, calcium fluoride, and barium chloride. Their contents may be adjusted according to actual conditions. The covering agent was a mixture mainly composed of chloride salts such as magnesium chloride and potassium chloride, and its dosage could be adjusted according to actual conditions.
(4) The obtained ingot material was placed into the die-casting melting furnace, with the furnace temperature set to 700°C for melting. Protective gas was introduced into the furnace to protect the magnesium alloy melt. Meanwhile, the required die-casting mold was installed on the die-casting machine, and the oil temperature of the mold was raised to 240°C for holding the temperature. After being completely melted, die-casting was performed on the material to obtain the die-cast part in a non-heat-treated state.

### Examples 2-9

The die-cast magnesium alloy was manufactured according to the method of Example 1, except that the chemical composition of said magnesium alloy was modified as specified in Table 1. All other processes remained identical to Example 1.

### Comparative Examples 1-5

The die-cast magnesium alloy was manufactured according to the method of Example 1, except that the chemical composition of said magnesium alloy was modified as specified in Table 1. All other processes remained identical to Example 1.

**Table 1**

| | Al | Mn | Zn | Ca | RE | Y | Fe+Ni+ Cu | RE+Y | RE/Y |
|---|---|---|---|---|---|---|---|---|---|
| Example 1 | 5.2 | 0.20 | 0.09 | 0.20 | 1.0 | 0.2 | 0.009 | 1.2 | 5.00 |
| Example 2 | 5.2 | 0.20 | 0.09 | 0.20 | 1.8 | 0.2 | 0.009 | 2.0 | 9.00 |
| Example 3 | 5.2 | 0.20 | 0.09 | 0.20 | 1.0 | 0.8 | 0.009 | 1.8 | 1.25 |
| Example 4 | 4.5 | 0.20 | 0.09 | 0.20 | 1.0 | 0.2 | 0.009 | 1.2 | 5.00 |
| Example 5 | 6.5 | 0.20 | 0.09 | 0.20 | 1.0 | 0.2 | 0.009 | 1.2 | 5.00 |
| Example 6 | 5.2 | 0.20 | 0.09 | 0.05 | 1.0 | 0.2 | 0.009 | 1.2 | 5.00 |
| Example 7 | 5.2 | 0.20 | 0.09 | 0.20 | 2.1 | 0.2 | 0.009 | 2.3 | 10.5 |
| Example 8 | 5.2 | 0.20 | 0.09 | 0.20 | 1.0 | 1.5 | 0.009 | 2.5 | 0.67 |
| Example 9 | 7.0 | 0.20 | 0.09 | 0.80 | 2.1 | 1.5 | 0.009 | 3.6 | 1.40 |
| Comparative 1 Example | 4.0 | 0.20 | 0.09 | 0.20 | 1.0 | 0.2 | 0.009 | 1.2 | 5.00 |
| Comparative 2 Example | 5.2 | 0.20 | 0.09 | - | 1.8 | 0.2 | 0.009 | 2.0 | 9.00 |
| Comparative 3 Example | 7.2 | 0.20 | 0.09 | 0.20 | 1.8 | 0.2 | 0.009 | 2.0 | 9.00 |
| Comparative 4 Example | 5.2 | 0.20 | 0.09 | 0.20 | 3.0 | 0.2 | 0.009 | 2.7 | 15.0 |
| Comparative 5 Example | 5.2 | 0.20 | 0.09 | 1.00 | 1.5 | 0.2 | 0.009 | 1.7 | 7.50 |
| Comparative 6 Example | 5.2 | 0.20 | 1.00 | 0.20 | 1.8 | 0.2 | 0.009 | 2.0 | 9.00 |
| Comparative 7 Example | 5.2 | 0.20 | 0.09 | 0.20 | 1.8 | - | 0.009 | 1.8 | - |
| Comparative 8 Example | 5.2 | 0.20 | 0.09 | 0.20 | - | 0.6 | 0.009 | 0.6 | - |

In the table 1, all metallic component data were expressed in "weight %"; the balance of the magnesium alloy in all Examples and Comparative Examples is Mg; A "-" indicated that this component was not added.

### Test Example 1

This test example was used to test the mechanical properties and bending performances of the die-cast magnesium alloys obtained in the above Examples and Comparative Examples.

In this test example, the specimens for testing alloy mechanical properties and bending performances (with reference to CN114487337A) were sampled from position C1-D1 on the "S"-shaped flow mold shown in Fig. 1, where "a" denoted sampling in the C1-D1 area. The bending specimens were strip-shaped specimens with dimensions of 30×60 mm, and were tested by the test method referring to VDA238. The bending performances results were all converted into the 2 mm equivalent bend angle for evaluation, with the conversion formula shown in Formula (1) below: ${α}_{2} = {α}_{1} \times \left(\frac{\sqrt{d 1}}{\sqrt{d 2}}\right)$ Formula (1); In Formula (1), α₁ is the actual bend angle of the specimen with a certain thickness of d1 in the actual test, and α₂ is the calculated angle corresponding to the equivalent thickness of d2 ( i.e., 2 mm in the present invention).

The casting performance of the alloys in the present invention could be evaluated by the filling state and the surface quality of the "S"-shaped flow mold. If the biscuit thickness was stable, the S-mold was completely filled, and no hot cracks were visible to the naked eye on the surface, the S-mold forming and effects would be evaluated as "OK" , otherwise, "NOK".

The mechanical properties of the alloy materials, including yield strength (YS), ultimate tensile strength (UTS), and elongation (EL), were tested in accordance with the GB/T 228.1 standard, and the dimensions of the specimens referred to the small-sized specimens specified in ASTM E8.

The test results were listed in Table 2 below.

**Table 2**

| | YS/MPa | UTS/MPa | EL/% | S-mold Forming and Effects | 2 mm Equivalent Bend Angle /° |
|---|---|---|---|---|---|
| Example 1 | 129 | 247 | 14.5 | OK | 60 |
| Example 2 | 133 | 251 | 15.5 | OK | 55 |
| Example 3 | 135 | 252 | 15.1 | OK | 62 |
| Example 4 | 118 | 236 | 16.7 | OK | 62 |
| Example 5 | 135 | 261 | 12.3 | OK | 50 |
| Example 6 | 125 | 244 | 14.2 | OK | 57 |
| Example 7 | 130 | 250 | 12.6 | OK | 52 |
| Example 8 | 134 | 262 | 13.2 | OK | 54 |
| Example 9 | 142 | 268 | 12.1 | OK | 50 |
| Comparative 1 Example | - | | | NOK | - |
| Comparative 2 Example | 130 | 245 | 14.2 | OK | 48 |
| Comparative 3 Example | 152 | 271 | 8.2 | OK | 45 |
| Comparative 4 Example | - | | | NOK | - |
| Comparative 5 Example | - | | | NOK | - |
| Comparative 6 Example | 146 | 255 | 7.4 | OK | 43 |
| Comparative7 Example | 126 | 242 | 13.8 | OK | 46 |
| Comparative Example 8 | 131 | 251 | 11.1 | OK | 47 |

### According to the data in Table 2, it can be seen that:

In Comparative Example 1, the Al content was lower than the range provided in the present invention. The magnesium alloy in Comparative Example 1 failed to form during the S-mold forming test, had a small 2 mm equivalent bend angle, and exhibited poor casting performance and bending performances. Based on the above results, there was no need to further consider the mechanical properties of this magnesium alloy. In Comparative Example 3, the Al content was higher than the range provided in the present invention, resulting in low elongation and a small 2 mm equivalent bend angle, indicating poor bending performances of the magnesium alloy.

The magnesium alloy in Comparative Example 2, to which No Ca was added, to, had a small 2 mm equivalent bend angle and poor bending performances. The Ca content in the magnesium alloy of Comparative Example 5 was too high, and the die-cast magnesium alloy obtained in Comparative Example 5 failed to form during the S-mold forming test, showing casting performance.

The RE content in the die-cast magnesium alloy of Comparative Example 4 was too high, and the weight ratio of RE/Y was not within the optimized range provided in the present invention. The die-cast magnesium alloy obtained in Comparative Example 4 failed to form during the S-mold forming test, showing casting performance.

The Zn content in the die-cast magnesium alloy of Comparative Example 6 was too high, resulting in low elongation and a small 2 mm equivalent bend angle, indicating poor bending performance of the alloy.

No Y was added to the die-cast magnesium alloy of Comparative Example 7, and no RE was added to the die-cast magnesium alloy of Comparative Example 8. The magnesium alloys obtained in Comparative Examples 7 to 8 had small 2 mm equivalent bend angles and poor bending performances.

The die-cast magnesium alloys provided in Examples 1 to 6 of the present invention exhibited excellent S-mold forming effects, with larger 2 mm equivalent bend angles and better bending performances.

By comparing Examples 7 to 8 with Example 1, it can be seen that the RE and Y contents in the die-cast magnesium alloy of Example 1 were both within the preferred ranges provided in the present invention. Therefore, the die-cast magnesium alloy of Example 1 showed excellent S-mold forming effects, with a larger 2 mm equivalent bend angle and better bending performances.

By comparing Example 1 with Example 9, it can be seen that the contents of all components in the die-cast magnesium alloy of Example 1 were within the preferred ranges provided in the present invention; thus, the die-cast magnesium alloy of Example 1 exhibited excellent S-mold forming effects, with a larger 2 mm equivalent bend angle and better bending performances.

### Test Example 2

SEM tests were performed on the die-cast magnesium alloys obtained in Example 3 and Comparative Example 7 using a Hitachi FlexSEM 1000P SU1000 microscope.

The SEM graph of the die-cast magnesium alloy from Example 3 was shown in Fig. 2a. As can be seen from Fig. 2a, in this die-cast magnesium alloy, all types of second phases had small sizes and exhibited a dispersed distribution; and the average grain size of the α-Mg substrate was approximately 10 µm. The SEM graph of the die-cast magnesium alloy from Comparative Example 7 was shown in Fig. 2b. As can be seen from Fig. 2b, in this die-cast magnesium alloy, no Y was added, resulting in the lack of a synergistic effect between Y and RE, and in a clear distribution of the coarse, and long rod-like second phases in the microstructure. By comparing Fig. 2a with Fig. 2b, it can be concluded that adding Y to the die-cast magnesium alloy in Example 3 exerted a synergistic effect between Y and RE, which could effectively refine the sizes of the α-Mg substrate and the Al₁₁RE₃ phase.

The specific embodiments of the present invention are described in detail above in connection with the accompanying drawings, however, the present invention is not limited to the specific details of the above embodiments. Within the scope of the technical concept of the present invention, a variety of simple variations of the technical solutions of the present invention can be made, and all such simple variations fall within the protection scope of the present invention.

It is also to be noted that the various specific technical features described in the above specific embodiments may be combined in any suitable manner without contradiction. To avoid unnecessary repetition, the present invention will not separately illustrate the various possible combinations.

Furthermore, the various different embodiments of the present invention may also be combined arbitrarily, as long as such combination does not contradict the present invention, it shall likewise be regarded to be content disclosed by the present invention.

## Claims

1. A die-cast magnesium alloy, comprising:
4.2 to 7.0 wt% of Aluminum (Al), 0.15 to 0.5 wt% of Manganese (Mn), 0.20 to 2.50 wt% of Rare Earth elements (RE), 0.01 to 1.5 wt% of Yttrium (Y), 0.03 to 0.80 wt% of Calcium (Ca), 0.01 wt% or less of Iron+Nickel+Copper (Fe+Ni+Cu), 0.20 wt% or less of Zinc (Zn), 0.05 wt% or less of impurities, and a balance of Magnesium (Mg),
wherein RE+Y ≥ 0.5 wt%, and RE comprises one or both of Lanthanum (La) and Cerium (Ce).

2. The die-cast magnesium alloy of claim 1, comprising:
4.5 to 6.5 wt% of Al, 0.15 to 0.50 wt% of Mn, 0.2 to 1.8 wt% of RE, 0.01 to 1.2 wt% of Y, 0.03 to 0.50 wt% of Ca, 0.01 wt% or less of Fe+Ni+Cu, 0.20 wt% or less of Zn, 0.05 wt% or less of impurities, and a balance of Mg.

3. The die-cast magnesium alloy of claim 1 or 2, wherein 0.5 wt% ≤ RE+Y ≤ 2.0 wt%.

4. The die-cast magnesium alloy of any one of claims 1 to 3, wherein 1 ≤ RE/Y ≤ 13.

5. The die-cast magnesium alloy of any one of claims 1 to 4, comprising an α-Mg substrate, wherein the α-Mg substrate is spheroidal-like.

6. The die-cast magnesium alloy of claim 5, wherein the α-Mg substrate is of an average grain size of 12 µm or less.

7. The die-cast magnesium alloy of any one of claims 1 to 6, wherein the die-cast magnesium alloy has a 2 mm equivalent bend angle of 50° or more.

8. A method for manufacturing a die-cast magnesium alloy, comprising steps:
S1, subjecting a raw material of magnesium alloy to a smelting treatment to obtain a magnesium alloy melt, wherein the raw material comprises: 4.2 to 7.0 wt% of Al, 0.15 to 0.5 wt% of Mn, 0.20 to 2.50 wt% of RE, 0.01 to 1.5 wt% of Y, 0.03 to 0.80 wt% of Ca, 0.01 wt% or less of Fe+Ni+Cu, 0.20 wt% or less of Zn, 0.05 wt% or less of impurities, and a balance of Mg, wherein RE+Y ≥ 0.5 wt%, and RE comprises one or both of La and Ce;
S2, adding a refining agent to the magnesium alloy melt for a refining treatment and adding a covering agent for a standing and cooling treatment, thereby obtaining an ingot casting material; and
S3, placing the ingot casting material in a die casting melting furnace to perform a melting treatment and a die-casting treatment.

9. The method of claim 8, wherein in step S2,
the refining agent comprises a first component and a second component, the first component comprises one or more of magnesium chloride, potassium chloride, and sodium chloride, the second component comprises one or more of calcium chloride, calcium fluoride, and barium chloride, and
the covering agent comprises one or more of magnesium chloride and potassium chloride.

10. The method of claim 8 or 9, wherein
in step S2, the refining treatment comprises stirring at 740 to 760°C for 10 to 30 minutes with the refining agent added during the stirring; the standing and cooling treatment comprises standing for 30 to 50 minutes to cool the magnesium alloy melt to 670 to 720°C; and
in step S3, the melting treatment is performed at 690 to 720°C, the die-casting treatment is performed at conditions of a die-cast speed of 3.0 to 7.5 m/s, a pressure-holding period of 3 to 15 seconds, and a mold temperature of 200 to 280°C.

11. A die-cast magnesium alloy manufactured by a method according to any one of claims 8 to 10.

12. An automotive structural component, comprising a die-cast magnesium alloy according to any one of claims 1 to 7 and 11.

## Amended claims

### Amended claims in accordance with Rule 137(2) EPC.

1. A die-cast magnesium alloy, comprising:
4.2 to 7.0 wt% of Aluminum (Al), 0.15 to 0.5 wt% of Manganese (Mn), 0.20 to 2.50 wt% of Rare Earth elements (RE), 0.01 to 1.5 wt% of Yttrium (Y), 0.03 to 0.80 wt% of Calcium (Ca), 0.01 wt% or less of Iron+Nickel+Copper (Fe+Ni+Cu), 0.20 wt% or less of Zinc (Zn), 0.05 wt% or less of impurities, and a balance of Magnesium (Mg),
wherein RE+Y ≥ 0.5 wt%, and RE comprises one or both of Lanthanum (La) and Cerium (Ce).

2. The die-cast magnesium alloy of claim 1, comprising:
4.5 to 6.5 wt% of Al, 0.15 to 0.50 wt% of Mn, 0.2 to 1.8 wt% of RE, 0.01 to 1.2 wt% of Y, 0.03 to 0.50 wt% of Ca, 0.01 wt% or less of Fe+Ni+Cu, 0.20 wt% or less of Zn, 0.05 wt% or less of impurities, and a balance of Mg.

3. The die-cast magnesium alloy of claim 1 or 2, wherein 0.5 wt% ≤ RE+Y ≤ 2.0 wt%.

4. The die-cast magnesium alloy of any one of claims 1 to 3, wherein 1 ≤ RE/Y ≤ 13.

5. The die-cast magnesium alloy of any one of claims 1 to 4, comprising an α-Mg substrate, wherein the α-Mg substrate is spheroidal-like.

6. The die-cast magnesium alloy of claim 5, wherein the α-Mg substrate is of an average grain size of 12 µm or less.

7. The die-cast magnesium alloy of any one of claims 1 to 6, wherein the die-cast magnesium alloy has a 2 mm equivalent bend angle of 50° or more.

8. A method for manufacturing a die-cast magnesium alloy, comprising steps:
S1, subjecting a raw material of magnesium alloy to a smelting treatment to obtain a magnesium alloy melt, wherein the raw material comprises: 4.2 to 7.0 wt% of Al, 0.15 to 0.5 wt% of Mn, 0.20 to 2.50 wt% of RE, 0.01 to 1.5 wt% of Y, 0.03 to 0.80 wt% of Ca, 0.01 wt% or less of Fe+Ni+Cu, 0.20 wt% or less of Zn, 0.05 wt% or less of impurities, and a balance of Mg, wherein RE+Y ≥ 0.5 wt%, and RE comprises one or both of La and Ce;
S2, adding a refining agent to the magnesium alloy melt for a refining treatment and adding a covering agent for a standing and cooling treatment, thereby obtaining an ingot casting material; and
S3, placing the ingot casting material in a die casting melting furnace to perform a melting treatment and a die-casting treatment.

9. The method of claim 8, wherein in step S2,
the refining agent comprises a first component and a second component, the first component comprises one or more of magnesium chloride, potassium chloride, and sodium chloride, the second component comprises one or more of calcium chloride, calcium fluoride, and barium chloride, and
the covering agent comprises one or more of magnesium chloride and potassium chloride.

10. The method of claim 8 or 9, wherein
in step S2, the refining treatment comprises stirring at 740 to 760°C for 10 to 30 minutes with the refining agent added during the stirring; the standing and cooling treatment comprises standing for 30 to 50 minutes to cool the magnesium alloy melt to 670 to 720°C; and
in step S3, the melting treatment is performed at 690 to 720°C, the die-casting treatment is performed at conditions of a die-cast speed of 3.0 to 7.5 m/s, a pressure-holding period of 3 to 15 seconds, and a mold temperature of 200 to 280°C.

11. An automotive structural component, comprising a die-cast magnesium alloy according to any one of claims 1 to 7.
